**Europäisches Patentamt**

**European Patent Office**

**Office européen des brevets**

(19)

(11) **EP 1 392 005 A1**

(12) **EUROPÄISCHE PATENTANMELDUNG**

(43) Veröffentlichungstag:
**25.02.2004 Patentblatt 2004/09**

(51) Int Cl.⁷: **H04B 7/06**, H04B 7/08

(21) Anmeldenummer: **02018096.4**

(22) Anmeldetag: **13.08.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(71) Anmelder: **SIEMENS AKTIENGESELLSCHAFT
80333 München (DE)**

(72) Erfinder:
- **Seeger, Alexander, Dr.
85622 Feldkirchen (DE)**
- **Sikora, Marcin
80805 München (DE)**

(54) **Verfahren zur Kanalschätzung und zugehöriges Funkkommunikationssystem**

(57) Die Erfindung betrifft ein Verfahren zur Kanalschätzung in Abwärtsrichtung in einem Funkkommunikationssystem, wobei in der Abwärtsstrecke eine Strahlformung mittels mehrerer Antennen eingesetzt wird, wobei mindestens ein für die Verbindung von der mindestens einen Basisstation zu der mindestens einen Teilnehmerstation zu verwendender Strahlformungsvektor von der mindestens einen Teilnehmerstation ermittelt wird und von der mindestens einen Teilnehmerstation Information, welche Information über diesen mindestens einen Strahlformungsvektor umfasst, der mindestens einen Basisstation (BS) übermittelt wird. Erfindungsgemäß übermittelt die mindestens eine Basisstation der mindestens einen Teilnehmerstation Information über den für die Verbindung von der mindestens einen Basisstation zu der mindestens einen Teilnehmerstation verwendeten Strahlformungsvektor, auf deren Grundlage die mindestens eine Teilnehmerstation eine Kanalschätzung durchführt.

## FIG 1

EP 1 392 005 A1

**Beschreibung**

Die Erfindung betrifft ein Verfahren zur Kanalschätzung in Abwärtsrichtung in einem Funkkommunikationssystem nach dem Oberbegriff des Anspruchs 1.

Ferner betrifft die Erfindung ein Funkkommunikationssystem nach dem Oberbegriff des Anspruchs 16.

In Funk-Kommunikationssystemen werden Informationen (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei Teilnehmerstationen, z.B. Mobilstationen, Basisstationen, z.B. Node B's, sowie weitere netzseitige Einrichtungen. Die Teilnehmerstationen und die Basisstationen sind in einem Funkkommunikationssystem über eine Funkschnittstelle miteinander verbunden.

Der Zugriff von Stationen auf die gemeinsamen Funkressourcen des Übertragungsmediums, wie zum Beispiel Zeit, Raum, Frequenz, Leistung wird bei Funk-Kommunikationssystemen durch Vielfachzugriffsverfahren (Multiple Access, MA) geregelt.

Werden einer Teilnehmerstation exklusiv Kanäle zugeteilt, so spricht man von dedizierten Kanälen (dedicated channels). Im Funkkommunikationssystem UMTS(Universal Mobile Telecommunications System) z.B. besteht der Dedicated Physical Channel (DPCH) aus zwei Komponenten, dem DPDCH (Dedicated Physical Data Channel), der die reinen Nutzdaten überträgt, und dem DPCCH (Dedicated Physical Control Channel), der Pilotsequenzen für kohärente Detektion, die Steuerungsbefehle für die schnelle Leistungssteuerung und Rateninformation transportiert.

Nach dem Empfang eines Signals muss die empfangende Station (Teilnehmerstation oder Basisstation) dieses verarbeiten. Hierzu findet eine Kanalschätzung statt, welche die empfangene Intensität des jeweiligen Kanals überprüft. In Hinblick auf stark assymetrische Datenübertragungen, bei welchen die Datenrate in Abwärtsrichtung (downlink), d.h. von Basisstation zur Teilnehmerstation sehr viel größer ist als in der Aufwärtsrichtung (uplink), d.h. von der Teilnehmerstation zur Basisstation, ist insbesondere die Kanalschätzung in Abwärtsrichtung von Interesse.

Zur Kanalschätzung des dedizierten Kanals in Abwärtsrichtung wird üblicherweise ein Common Pilot Channel (CPICH) eingesetzt. Hierbei handelt es sich um einen Kanal, auf welchem eine Pilotsequenz mit hoher Sendeleistung omnidirektional (im Gegensatz zu einer gerichteten Abstrahlung durch strahlformende Antennen) abgestrahlt wird. Eine andere Möglichkeit zur Kanalschätzung des dedizierten Kanals in Abwärtsrichtung besteht darin, Pilotsequenzen von dedizierten Kanälen, z.B. auf dem Dedicated Physical Control Channel (DPCCH), zu verwenden. Dieses Verfahren weist jedoch aufgrund der geringeren Sendeleistung in den dedizierten Kanälen im Vergleich zum Common Pilot Channel eine größere Fehlerwahrscheinlichkeit durch Rauschen auf, verursacht durch den geringeren Wert des Signal-zu-Rausch Verhältnisses (SIR: Signal to Noise Ratio).

Felder von adaptiven Antennen (adaptive antenna array, smart antenna) können eingesetzt werden, um die Ausnutzung der Ressourcen eines Funkkommunikationssystems in Abwärtsrichtung zu erhöhen, da die gegenseitige Störbeeinflussungen der zu verschiedenen Teilnehmerstationen gesendeten Signale reduziert wird. Dies wird durch eine Strahlformung erreicht, d.h. das Signal wird von der Basisstation nicht omnidirektional, sondern räumlich gerichtet ausgestrahlt.

Die Basisstation übermittelt das Signal an die Teilnehmerstation über einen dedizierten Kanal durch jede Einzelantenne des Feldes von adaptiven Antennen. Hierzu wird an jeder Einzelantenne das Signal mit einem antennenspezifischen Faktor multipliziert, so dass sich aus der Summe der von den Einzelantennen gesendeten Signale eine teilnehmerspezifische Strahlform ergibt. Der Vektor, welcher aus den antennenspezifischen Faktoren für eine Teilnehmerstation besteht, wird Gewichtsvektor oder Strahlformungsvektor genannt. Dieser Strahlformungsvektor sollte derart gewählt werden, dass die Teilnehmerstation eine große Signalintensität in Verbindung mit niedrigen Interferenzwerten für alle Teilnehmerstationen empfangen kann. Um eine Zuordnung eines Strahlformungsvektors zu einer Teilnehmerstation durchführen zu können, müssen Werte für die Intensität der Kanäle der Einzelantennen in Abwärtsrichtung in Bezug auf die jeweilige Teilnehmerstation bekannt sein.

Die Werte für die Intensität der Kanäle der Einzelantennen in Abwärtsrichtung in Bezug auf eine Teilnehmerstation können auf verschiedene Arten ermittelt werden. Wenn Reziprozität zwischen den Aufwärts- und den Abwärtskanälen angenommen wird, so kann eine Basisstation Messungen an den Aufwärtskanälen durchführen und die Ergebnisse auf die Abwärtskanäle übertragen. Die erforderliche Reziprozität ist z.B. dann gegeben, wenn ein Funkkommunikationssystem einen Zeitmultiplex (TDD, Time Division Diversity) einsetzt und die betroffene Teilnehmerstation sich nicht schnell bewegt. Bei Verwendung eines Frequenzmultiplex (FDD, Frequency Division Diversity) jedoch ist die Reziprozität zwischen den Aufwärts- und den Abwärtskanälen aufgrund der unterschiedlichen Frequenzen der Aufwärts- und der Abwärtskanäle und der frequenzselektiven Dämpfung nicht gegeben. In diesem Fall ist es nicht sinnvoll, dass die Basisstation die Werte für die Intensität der Kanäle der Einzelantennen in Abwärtsrichtung in Bezug auf eine Teilnehmerstation ermittelt.

Die zweite Art, die Werte für die Intensität der Kanäle der Einzelantennen in Abwärtsrichtung in Bezug auf eine Teilnehmerstation zu ermitteln, besteht darin, dass die Teilnehmerstation selbst die erforderlichen Messungen durchführt. Diese Werte müssen dann von der Teilnehmerstation zur Basisstation in Aufwärtsrichtung übermittelt werden. Aufgrund der begrenzten Ressourcen in Aufwärtsrichtung kann es hierbei zu einer Verzögerung kommen, so dass die Basisstation nicht die aktuell geltenden Werte zur Strahlformung zur Verfügung hat.

Die Auswahl des Strahlformungsvektors kann entweder von der Basisstation oder von der Teilnehmerstation durchgeführt werden. In letzterem Fall wird die Intensität des von der Teilnehmerstation empfangenen Signals maximiert. Ermittelt die Teilnehmerstation einen Strahlformungsvektor, welcher von der Basisstation zur Übertragung von Daten an diese Teilnehmerstation verwendet werden soll, so muss die Teilnehmerstation der Basisstation den ermittelten Strahlformungsvektor übermitteln. Wird dagegen die Auswahl des Strahlformmungsvektors von der Basisstation durchgeführt, so ist eine gemeinsame Strahlformung für mehrere Teilnehmerstationen (joint beamforming) möglich. Hierbei wird angestrebt, die Intensität der von den Teilnehmerstationen empfangenen Signale zu maximieren und gleichzeitig die Interferenz zu minimieren.

Die Kanalschätzung in Abwärtsrichtung gestaltet sich bei der Verwendung von adaptiven Antennen schwieriger als bei einer einzigen Antenne. Denn der Kanal, welcher die Pilotsequenzen zur Kanalschätzung beinhaltet, muss in seiner Strahlform bzw. in seiner räumlichen Intensitätsverteilung demjenigen entsprechen, welcher die Nutzdaten enthält, z.B. dem Dedicated Physical Data Channel (DPDCH). Der Einsatz einer Pilotsequenz auf dem dedizierten Kanal für die Kanalschätzung ist wie auch bei der Verwendung einer einzigen Antenne möglich. Hierbei ist keine Kenntnis des Strahlformungsvektors durch die Teilnehmerstation erforderlich. Aufgrund der hohen Fehlerrate dieses Verfahrens ist jedoch die Verwendung des Common Pilot Channels zur Kanalschätzung des dedizierten Kanals wünschenswert. Auch kann bei Verwendung der Pilotsequenz auf dem dedizierten Kanal keine zeitliche Mittelung zur Verbesserung der Ergebnisse eingesetzt werden, da der Strahlformungsvektor mit der Zeit variiert. Bei Verwendung des Common Pilot Channels zur Kanalschätzung hingegen kann eine zeitliche Mittelung durchgeführt werden. Wird ein Feld von adaptiven Antennen eingesetzt, so weist jede Einzelantenne einen eigenen Common Pilot Channel mit einer eigenen Pilotsequenz auf. Um diesen Kanal zur Kanalschätzung für den dedizierten Kanal einsetzen zu können, muss die Teilnehmerstation jedoch Kenntnis des aktuell von der Basisstation für den dedizierten Kanal verwendeten Strahlformungsvektors haben. Somit erfordert die Verwendung des Common Pilot Channels zur Kanalschätzung des dedizierten Kanals eine genaue Synchronisierung zwischen der Teilnehmerstation und der Basisstation hinsichtlich des Strahlformungsvektors.

Der skalare Übertragungskanal für den dedizierten Kanal $h_{DCH}$ ergibt sich als Skalarprodukt aus dem von der Basisstation verwendeten Strahlformungsvektor $\vec{w}$ und dem Vektor der komplexen Kanalübertragungskoeffizienten für jede Einzelantenne $\vec{h}_{CPICH}$: $h_{DCH} = \vec{w} \cdot \vec{h}_{CPICH}$.

Bezüglich der Kanalschätzung unter Verwendung der Common Pilot Channels der einzelnen Antennen erhält man das Kanalschätzergebnis für den dedizierten Kanal $h_{DCH}$ als Skalarprodukt aus dem von der Teilnehmerstation geschätzten Strahlformungsvektor $\hat{\vec{w}}$ und dem Vektor der Kanalschätzwerte pro Antennenelement $\hat{\vec{h}}_{CPICH}$, unter Verwendung der Common Pilot Channels: $\hat{h}_{DCH} = \hat{\vec{w}} \cdot \hat{\vec{h}}_{CPICH}$. Während dieses Kanalschätzergebnis wegen der großen Leistung der Common Pilot Channels sehr zuverlässig ist, wird diese Zuverlässigkeit dadurch, dass es sich bei dem zur Kanalschätzung verwendeten Strahlformungsvektor um einen geschätzten Wert handelt, reduziert. Der Wert $\hat{\vec{w}}$ ist deshalb ein geschätzter, weil die Teilnehmerstation ohne exakte Kenntnis davon ausgehen muss, dass dieser Wert tatsächlich von der Basisstation verwendet wurde. Daher ist die genaue Kenntnis der Teilnehmerstation von dem tatsächlich verwendeten Strahlformungsvektor für eine effiziente Kanalschätzung von großem Interesse.

Aufgrund gravierender Nachteile, welche die Auswahl des Strahlformungsvektors mit Hilfe von Messungen an Aufwärtskanälen mit sich bringt, wird eine Auswahl des Strahlformungsvektors mit Hilfe von Messungen an Abwärtskanälen favorisiert, wie in dem 3GGP Report [3GGP TR 25.869 v1.0.0(2001-06), Tx diversity solutions for multiple antennas (Release 5)] dargestellt. Hierbei findet sowohl die Bestimmung der Werte für die Intensität der Kanäle der Einzelantennen in Abwärtsrichtung in Bezug auf eine Teilnehmerstation, als auch die Ermittlung des geeigneten Strahlformungsvektors in der jeweiligen Teilnehmerstation statt. Dieser Strahlformungsvektor wird dann der Basisstation übermittelt. Diese Übermittlung kann peu a peu in einzelnen Informationsstücken abgewickelt werden. Um die Synchronisierung zwischen der Teilnehmerstation und der Basisstation hinsichtlich des Strahlformungsvektors aufrecht zu erhalten, muss die Basisstation den ihr von der Teilnehmerstation übermittelten Strahlformungsvektor zur Übertragung der Signale auf dem dedizierten Kanal verwenden. Da die Teilnehmerstation somit Kenntnis des aktuell verwendeten Strahlformungsvektors hat, kann die Kanalschätzung in Abwärtsrichtung unter Verwendung des Common Pilot Channels erfolgen.

Problematisch an dieser Vorgehensweise ist, dass die Synchronisierung zerstört wird, wenn Übertragungsfehler bei der Übermittlung des von der Teilnehmerstation ermittelten Strahlformungsvektors an die Basisstation auftreten. Um dieses Problem zu umgehen, wird beispielsweise in der 3GGP Spezifikation [3GGP TS 25.214 V.3.4.0. Release 99. September 2000] vorgeschlagen, eine Strahlformungsvektor-Verifizierungs-Prozedur durchzuführen. Hierzu werden als mögliche Hypothesen eine korrekte und eine fehlerbehaftete Übertragung des von der Teilnehmerstation ermittelten Strahlformungsvektors an die Basisstation in Betracht gezogen. Für beide Alternativen wird das Ergebnis der Kanalschätzung, welches auf der Verwendung des Common Pilot Channel basiert, bestimmt. Diese Ergebnisse werden dann im Rahmen einer Maximum a Posteriori Betrachtung verglichen mit dem Ergebnis der Kanalschätzung, welches auf der Verwendung des dedizierten Kanals basiert. Somit kann eine Entscheidung getroffen werden, welcher Strahlformungsvektor von der Basisstation verwendet wurde. Der so ermittelte Wert für den Strahlformungsvektor wird dann zur Kanalschätzung mit Hilfe des Common Pilot Channels eingesetzt.

Der Nachteil dieses Verfahrens liegt darin begründet, dass es nur dann zuverlässige Ergebnisse liefert, wenn die mit den beiden Hypothesen ermittelten Werte sich deutlich unterscheiden. In der Regel wird nur eine diskrete Anzahl an Strahlformungsvektoren zugelassen. Je größer diese Anzahl wird, desto geringer sind die Unterschiede zwischen den einzelnen Strahlformungsvektoren. Die beschriebene Strahlformungsvektor-Verifizierungs-Prozedur schränkt daher die Anzahl an zugelassenen Strahlformungsvektoren ein, was zu einer Verringerung der Leistungsfähigkeit des Systems führt.

Ein weiterer Nachteil dieses Verfahrens ist darin zu sehen, dass ausschließlich diejenigen Übertragungsfehler detektiert werden können, welche sich direkt auf in Aufwärtsrichtung gesendete Informationen, welche den aktuell verwendeten Strahlformungsvektor betreffen, beziehen. In weiter fortgeschrittenen Verfahren zur Kanalschätzung hingegen ist es erforderlich, andere Informationen, wie z.B. die Geschwindigkeit einer Teilnehmerstation, von der jeweiligen Teilnehmerstation an die Basisstation zu übermitteln und die korrekte Übertragung auch dieser Information zu verifizieren.

Der Erfindung liegt die Aufgabe zugrunde, ein Verfahren zur Kanalschätzung in Abwärtsrichtung der eingangs genannten Art und ein zugehöriges Funkkommunikationssystem der eingangs genannten Art bei dem Einsatz eines Feldes von adaptiven Antennen zur Strahlformung aufzuzeigen, die eine effektive Kanalschätzung ermöglichen.

Diese Aufgabe wird hinsichtlich des Verfahrens durch ein Verfahren mit den Merkmalen des Anspruchs 1 gelöst.

Ausgestaltungen und Weiterbildungen sind Gegenstand der Unteransprüche.

Erfindungsgemäß übermittelt die mindestens eine Basisstation der mindestens einen Teilnehmerstation Information über den für die Verbindung von der mindestens einen Basisstation zu der mindestens einen Teilnehmerstation verwendeten Strahlformungsvektor, auf deren Grundlage die mindestens eine Teilnehmerstation eine Kanalschätzung durchführt.

Die Information über den für die Verbindung verwendeten Strahlformungsvektor kann verschieden ausgestaltet sein. Z.B. kann sie den Strahlformungsvektor direkt betreffen, d.h. seinen "Wert" übermitteln, oder ihn auch nur indirekt betreffen. Ein Beispiel für Information, welche den Strahlformungsvektor nur indirekt betrifft, ist Information über ein zur Verfügung stehendes Set an Strahlformungsvektoren. Dies kann z.B. einem Update unterworfen werden, d.h. mit der Zeit variieren. Es ist auch möglich, dass sie nur einen Teil des Strahlformungsvektors betrifft, z.B. den von einer Antenne verwendeten antennenspezifischen Faktor. Die Information über den für die Verbindung verwendeten Strahlformungsvektor kann inhaltlich auch an der Strahlformungsvektoren betreffenden Information, welche die mindestens eine Teilnehmerstation an die mindestens eine Basisstation übermittelt hat, angelehnt sein.

Vorteile des erfindungsgemäßen Verfahrens liegen darin,

- dass negative Folgen von Übertragungsfehlern, welche bei der Übertragung von Information über den Strahlformungsvektor in Aufwärtsrichtung auftreten können, behoben werden können,
- dass die Möglichkeit besteht, den Common Pilot Channel effektiv zur Kanalschätzung einzusetzen,
- dass keine Begrenzung der Anzahl an möglichen Strahlformungsvektoren nötig ist,
- dass im Vergleich zur herkömmlichen Signalverarbeitung in der Teilnehmerstation kein signifikanter Mehraufwand für die Durchführung des erfindungsgemäßen Verfahrens nötig ist,
- und dass auch diejenigen Übertragungsfehler berücksichtigt werden können, welche bei der Übertragung von den Strahlformungsvektor nur indirekt oder langfristig beeinflussenden Informationen auftreten.

In einer Weiterbildung der Erfindung umfasst die Information über den für die Verbindung von der mindestens einen Basisstation zu der mindestens einen Teilnehmerstation verwendeten Strahlformungsvektor Information über den aktuell für die Verbindung von der mindestens einen Basisstation zu der mindestens einen Teilnehmerstation verwendeten Strahlformungsvektor. In diesem Fall teilt die Basisstation der Teilnehmerstation also zumindest teilweise mit, welchen Strahlformungsvektor sie aktuell anwendet. Dies erweist sich in direkter Weise als vorteilhaft für die Kanalschätzung, da diese auf dem aktuell verwendeten Strahlformungsvektor beruhen kann. Im allgemeinen ist es auch möglich, dass die Basisstation Information über einen zukünftig eventuell zu verwendenden Strahlformungsvektor an die Teilnehmerstation übermittelt. Diese Information kann in aufwendigere Kanalschätzverfahren integriert werden.

Mit Vorteil kann die Information, welche von der mindestens einen Teilnehmerstation der mindestens einen Basisstation übermittelt wird, die zeitliche Entwicklung des mindestens einen Strahlformungsvektors betreffende Information umfassen. In der Regel wird ein fixes Set an möglichen Strahlformungsvektoren verwendet, z.B. vier Stück. Die Teilnehmerstation ermittelt dann einen von diesen vier Strahlformungsvektoren. Es ist jedoch auch möglich, dass dieses Set nicht fix ist, sondern an die räumliche Situation des Teilnehmerstation angepasst wird. Während sich der aktuell zu verwendende Strahlformungsvektor in der Regel schnell verändert, unterliegt das Set an Strahlformungsvektoren langsameren Änderungen mit der Zeit. Ein Beispiel für Information, welche die zeitliche Entwicklung eines Strahlformungsvektors betrifft, wäre ein Update des Sets an Strahlformungsvektoren. Dieses Update wirkt erst mit Verzögerung auf den aktuell verwendeten Strahlformungsvektor.

In Ausgestaltung der Erfindung umfasst die Information über den für die Verbindung von der mindestens einen Basisstation zu der mindestens einen Teilnehmerstation verwendeten Strahlformungsvektor eine von der mindestens einen Basisstation aus einer Anzahl von Pilotsequenzen ausgewählte Pilotsequenz eines dedizierten Kanals. Dies beinhaltet, dass die zur Verfügung stehenden Pilotsequenzen inhaltlich an Strahlformungsvektoren angekoppelt sind. Somit kann durch die Auswahl und das Übermitteln einer Pilotsequenz Information über einen Strahlformungsvektor übermittelt werden.

Vorzugsweise kann die Anzahl von Pilotsequenzen zwei gegenphasige Sequenzen umfassen. Eine derartige Auswahl an Sequenzen vereinfacht die Durchführung des Verfahrens merklich.

In einer bevorzugten Ausführungsform der Erfindung erfolgt die Kanalschätzung in Abwärtsrichtung durch die mindestens eine Teilnehmerstation unter Verwendung von mindestens einem von der mindestens einen Basisstation omnidirektional abgestrahlten Kanal. Ein Beispiel für einen derartigen omnidirektional abgestrahlten Kanal stellt ein Common Pilot Channel dar. Der Begriff "omnidirektional" beinhaltet hierbei nicht ausschließlich die exakt räumlich homogene Abstrahlung, sondern beschreibt vielmehr diejenigen Kanäle, welche nicht durch die Verwendung einer Vielzahl von Antennen mit entsprechenden Strahlformungsvektoren räumlich gerichtet abgestrahlt werden. Dadurch, dass die Teilnehmerstation von der Basisstation Information über den verwendeten Strahlformungsvektor erhält, ist sie in der Lage, die Kanalschätzung unter Verwendung eines omnidirektional abgestrahlten Kanals durchzuführen, welcher nicht die gleiche räumliche Strahlungscharakteristik aufweist wie der strahlgeformte dedizierte Kanal.

In Weiterbildung der Erfindung entnimmt die mindestens eine Teilnehmerstation nach dem Empfangen der Information über den für die Verbindung von der mindestens einen Basisstation zu der mindestens einen Teilnehmerstation verwendeten Strahlformungsvektor aus dieser Information einen für die Kanalschätzung in Abwärtsrichtung verwendeten Strahlformungsvektor. Die Teilnehmerstation kann also aus der von der Basisstation gesendeten Information auf direkte Weise einen Strahlformungsvektor ablesen, den sie für die Kanalschätzung verwendet.

In einer anderen Weiterbildung der Erfindung führt die mindestens eine Teilnehmerstation nach dem Empfangen der Information über den für die Verbindung von der mindestens einen Basisstation zu der mindestens einen Teilnehmerstation verwendeten Strahlformungsvektor unter Verwendung dieser Information Berechnungen zur Verifikation des Strahlformungsvektors durch. Ein Beispiel für eine derartige Berechnung ist die oben beschriebene Strahlformungsvektor-Verifizierungs-Prozedur mit einer a Posteriori Betrachtung. Es sind jedoch auch andere Berechnungen zur Verifikation des Strahlformungsvektors geeignet. Das Ergebnis dieser Berechnungen kann dann von der Teilnehmerstation zur Kanalschätzung herangezogen werden.

Besonders vorteilhaft ist eine derartige Strahlformungsvektor-Verifizierungs-Prozedur in Kombination mit der Verwendung einer Anzahl von Pilotsequenzen. Während bei herkömmlichen Strahlformungsvektor-Verifizierungs-Prozeduren die Qualität der Ergebnisse mit der Anzahl möglicher Strahlformungsvektoren sinkt, ist dies bei dem erfindungsgemäßen Verfahren nicht der Fall. Somit kann beim Einsatz des erfindungsgemäßen Verfahrens eine feinere Quantisierung der Strahlformungsvektoren verwendet werden. Dies erhöht die Effizienz der Nutzung der Funkressourcen.

Mit Vorteil kann die Information über den mindestens einen von der mindestens einen Teilnehmerstation ermittelten Strahlformungsvektor als einzelne Bits von dieser übermittelt werden. Die Information über den Strahlformungsvektor wird also vor dem Senden in einzelne Bits aufgeteilt. Bei Verwendung von Zeitschlitzen kann dann z.B. pro geeignetem oder hierfür bereit gestelltem Zeitschlitz ein Bit an Information über den Strahlformungsvektor übermittelt werden. Die Information betrifft dann in der Regel nur einen Teil des Strahlformungsvektors.

Vorteilhafterweise wird die Information über den für die Verbindung von der mindestens einen Basisstation zu der mindestens einen Teilnehmerstation verwendeten Strahlformungsvektor als einzelne Bits von der mindestens einen Basisstation übermittelt. Wird die Information über den mindestens einen von der mindestens einen Teilnehmerstation ermittelten Strahlformungsvektor als einzelne Bits von dieser übermittelt, so ist es günstig, dass die Information über den für die Verbindung von der mindestens einen Basisstation zu der mindestens einen Teilnehmerstation verwendeten Strahlformungsvektor mit der selben Taktrate übermittelt wird. Steht für die Information über den für die Verbindung von der mindestens einen Basisstation zu der mindestens einen Teilnehmerstation verwendeten Strahlformungsvektor in Abwärtsrichtung eine größere Kapazität an Funkressourcen zur Verfügung als für die Information über den mindestens einen von der mindestens einen Teilnehmerstation ermittelten Strahlformungsvektor in Aufwärtsrichtung, so kann diese Kapazität im Rahmen von Fehlerschutzmaßnahmen eingesetzt werden.

Gemäß einer bevorzugten Ausführungsform verifiziert die Information über den für die Verbindung von der mindestens einen Basisstation zu der mindestens einen Teilnehmerstation verwendeten Strahlformungsvektor die fehlerfreie Übertragung der von der mindestens einen Teilnehmerstation an die mindestens eine Basisstation übermittelten Strahlformungsvektoren betreffenden Information. Die von der Basisstation an die Teilnehmerstation übermittelte Information ist also derartig ausgestaltet, dass sie es erlaubt, ihr zu entnehmen, ob die Information, welche die Teilnehmerstation an die Basisstation gesendet hat, ohne gravierenden Übertragungsfehler übertragen wurde. Dies bedeutet, dass die Basisinformation nach der Übertragung fehlerfrei vorliegen soll. Dies schließt nicht aus, dass die redundante Information, welche zur Codierung der Basisinformation erzeugt wurde, fehlerbehaftet ist. Gegenstand der Verifizierung kann jegliche Information sein, welche von der Teilnehmerstation übermittelt wurde, wenn sie einen Strahlformungsvektor betrifft.

In einer Ausgestaltung der Erfindung indiziert die Information über den für die Verbindung von der mindestens einen Basisstation zu der mindestens einen Teilnehmerstation verwendeten Strahlformungsvektor eine Bestätigung eines des mindestens einen von der mindestens einen Teilnehmerstation ermittelten Strahlformungsvektors als aktuell für die Verbindung von der mindestens einen Basisstation zu der mindestens einen Teilnehmerstation verwendeten Strahlformungsvektor. Die Basisstation akzeptiert und verwendet also einen von der Teilnehmerstation ermittelten Strahlformungsvektor und teilt dies der Teilnehmerstation mit.

In einer Weiterbildung der Erfindung indiziert die Information über den für die Verbindung von der mindestens einen Basisstation zu der mindestens einen Teilnehmerstation verwendeten Strahlformungsvektor eine Ablehnung von mindestens einem des mindestens einen von der mindestens einen Teilnehmerstation ermittelten Strahlformungsvektor als aktuell für die Verbindung von der mindestens einen Basisstation zu der mindestens einen Teilnehmerstation verwendeten Strahlformungsvektor. Die Basisstation lehnt also mindestens einen von der Teilnehmerstation ermittelten Strahlformungsvektor ab, verwendet diesen also nicht, und teilt dies der Teilnehmerstation mit.

Vorteilhafterweise wird das erfindungsgemäße Verfahren in Verbindung mit einem Verfahren in der mindestens einen Basisstation zur gemeinsamen Strahlformung für mehrere Teilnehmerstationen eingesetzt. Hierbei liegt die Entscheidung darüber, welcher Strahlformungsvektor verwendet wird, bei der Basisstation. Somit kann diese die Entscheidung über den Strahlformungsvektor zugunsten einer Vielzahl von Teilnehmerstationen treffen.

Gemäß einer vorteilhaften Ausgestaltung wird das erfindungemäße Verfahren in einem CDMA Kommunikationssystem eingesetzt. Hierbei kann die Verwendung von Codes kombiniert sein mit anderen Separierungsverfahren, z.B. einem Zeit- oder einem Frequenzmultiplex.

In Hinblick auf das Funkkommunikationssystem wird die oben genannte Aufgabe durch ein Funkkommunikationssystem mit den Merkmalen des Anspruchs 16 gelöst.

Erfindungsgemäß weist die mindestens eine Basisstation Einrichtungen zum Übermitteln von Information über den für die Verbindung zwischen der mindestens einen Teilnehmerstation und der mindestens einen Basisstation verwendeten Strahlformungsvektor an die mindestens eine Teilnehmerstation auf, und die mindestens eine Teilnehmerstation weist Einrichtungen zur Durchführung von Kanalschätzung unter Verwendung der von der mindestens einen Basisstation übermittelten Information auf.

Mittel und Einrichtungen zur Durchführung der Verfahrensschritte gemäß den Ausgestaltungen und Weiterbildungen der Erfindung können vorgesehen sein.

Einzelheiten und Details der Erfindung werden anhand eines Ausführungsbeispiels im folgenden erläutert. Dabei zeigt

Figur 1     ein erstes Ablaufdiagramme des erfindungsgemäßen Verfahrens in Bezug auf den Strahlformungsvektor in Mobil- und Basisstation,

Figur 2     ein zweites Ablaufdiagramme des erfindungsgemäßen Verfahrens in Bezug auf den Strahlformungsvektor in Mobil- und Basisstation,

Das Ausführungsbeispiel bezieht sich auf ein WCDMA-System. WCDMA ist ein Zugangsverfahren für die Mobilfunkkommunikations im Rahmen von UMTS. Es beruht auf der Verwendung von mindestens zwei 5 MHz Frequenzbändern für die Übertragung in Aufwärts- sowie in Abwärtsrichtung (FDD Technologie).

Im betrachteten Funkkommunikationssystem findet die Kommunikation zwischen einer Basisstation und einer Mobilstation, welche über eine Luftschnittstelle verbunden sind, statt.Die Basisstation weist mehrere Antennen auf, so dass eine Strahlformung zur Übermittlung von Signalen in Abwärtsrichtung durchgeführt wird. Der Strahlformung unterliegt der dedizierte Kanal, welcher aus dem Dedicated Physical Data Channel (DPDCH) und dem Dedicated Physical Control Channel (DPCCH) besteht.

Die Mobilstation ermittelt die Werte für die Intensität der Kanäle der Einzelantennen in Abwärtsrichtung. Aufgrund dieser Messungen entscheidet sie sich für einen Strahlformungsvektor, welcher geeignet ist, den Empfangspegel der an sie adressierten Signale zu maximieren. Hierfür steht eine diskrete Anzahl von Strahlformungsvektoren zur Verfügung. Im betrachteten Beispiel soll der einfache Fall betrachtet werden, dass nur zwei Strahlformungsvektoren zur Verfügung stehen. Zur Übertragung des ermittelten Strahlformungsvektors stehen im WCDMA-System in jedem Aufwärts-Zeitschlitz ein Bit zur Verfügung. Somit übermittelt die Mobilstation jeweils 1 Bit des Strahlformungsvektors an die Basisstation.

Die Basisstation empfängt in jedem Zeitschlitz ein Bit an Information über den von der Mobilstation gewünschten Strahlformungsvektor. Die Basisstation kann diesem Wunsch entweder Genüge leisten und den Strahlformungsvektor für die Übertragung von Signalen auf dem dedizierten Kanal entsprechend einstellen. Es ist aber auch möglich, dass die Basisstation einen anderen Strahlformungsvektor für die Mobilstation wählt. Dies könnte z.B. dadurch begründet sein, dass die Basisstation gemeinsame Strahlformung für mehrere Mobilstationen durchführt. In diesem Fall kann es zur Minimierung der Interferenz günstiger sein, einen anderen als den von der Mobilstation ermittelten Strahlformungsvektor einzusetzen.

Um eine hohe Qualität der in der Mobilstation durchzuführenden Kanalschätzung für den dedizierten Kanal zu gewährleisten, wird der Common Pilot Channel zur Kanalschätzung eingesetzt. Hierzu muss der Mobilstation bekannt sein, welchen Strahlformungsvektor die Basisstation für die Übertragung von Signalen auf dem dedizierten Kanal verwendet hat. Dieser könnte sich von dem "Wunschkandidaten" der Mobilstation dann unterscheiden, wenn bei der Übertragung desselben von der Mobilstation zur Basisstation ein Fehler aufgetreten ist, oder wenn sich die Basisstation entschieden hat, einen anderen Strahlformungsvektor zu verwenden.

Um die Mobilstation zu informieren, welchen Strahlformungsvektor die Basisstation verwendet hat, werden zwei gegenphasige Pilotsequenzen auf dem Dedicated Physical Control Channel verwendet. Im Gegensatz zu denjenigen Pilotsequenzen des dedizierten Kanals, welche zur Kanalschätzung eingesetzt werden, und somit fix sind, handelt es sich bei den zur Ermittlung des verwendeten Strahlformungsvektors eingesetzten Pilotsequenzen um variable Sequenzen. Diese Sequenzen sind inhaltlich an die beiden möglichen Strahlformungsvektoren gekoppelt. D.h. abhängig von dem verwendeten Strahlformungsvektor wird eine der beiden möglichen Pilotsequenzen übermittelt.

In der Regel handelt es sich bei den Pilotsequenzen der dedizierten Kanäle um Sequenzen der Länge 4 Bit. Da zur Übertragung des von der Mobilstation ermittelten Strahlformungsvektors zur Basisstation im WCDMA-System in jedem Aufwärts-Zeitschlitz 1 Bit zur Verfügung steht, ist es ausreichend, zur Ermittlung des verwendeten Strahlformungsvektors eine Pilotsequenz der Länge 1 Bit zu senden. Da die Pilotsequenzen der dedizierten Kanäle eine Länge von 4 Bit aufweisen, kann eine Codierung der 1 Bit langen Pilotsequenz eingesetzt werden.

Im einfachsten Fall entnimmt die Mobilstation der 1 Bit langen Pilotsequenz direkt den verwendeten Strahlformungsvektor. Da die Mobilstation der Basisstation 1 Bit an Information über den von ihr erwünschten Strahlformungsvektor gesendet hat, kann die Übermittlung der ersten der beiden möglichen Pilotsequenzen bedeuten, dass dieses Bit an Information über den erwünschten Strahlformungsvektor von der Basisstation entsprechend umgesetzt wurde, die Übermittlung der zweiten Pilotsequenz hingegen, dass der andere mögliche Strahlformungsvektor von der Basisstation gewählt wurde.

Es ist jedoch auch möglich, dass die Mobilstation den verwendeten Strahlformungsvektor nicht direkt aus der Trainingssequenz entnimmt, sondern Berechnungen zur Verifikation des Strahlformungsvektors, z. B. in Form einer a Posteriori Wahrscheinlichkeitsbetrachtung, durchführt. Dies ist von Interesse in Zusammenhang mit Übertragungsfehlern bei der Aufwärts-Übermittlung des erwünschten Strahlformungsvektors.

Mit Kenntnis des von der Basisstation verwendeten Strahlformungsvektors kann die Mobilstation dann eine Kanalschätzung des dedizierten Kanals unter Verwendung der Pilotsequenzen des Common Pilot Channels durchführen.

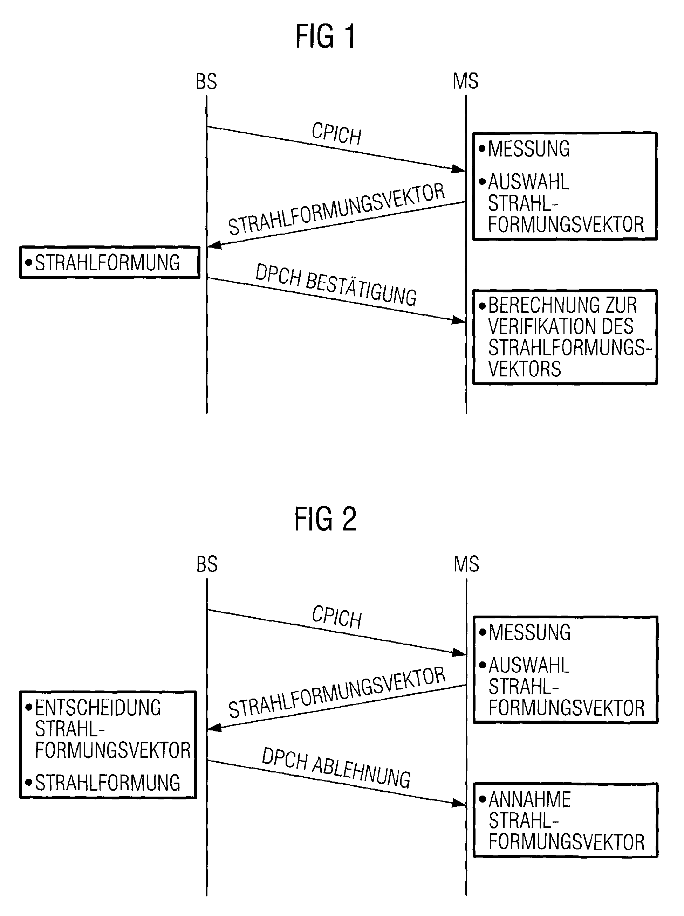

In Figur 1 ist der zeitliche Verfahrensablauf zwischen der Basisstation BS und der Mobilstation MS für den Fall dargestellt, dass die Basisstation BS den von der Mobilstation MS gewünschten Strahlformungsvektor zur Übermittlung von Signalen auf dem dedizierten Kanal verwendet. In diesem einfachen Fall kann die Informationsübermittlung durch die Pilotsequenzen des dedizierten Kanals dazu verwendet werden, eine effektivere Strahlformungsvektor-Verifizierungs-Prozedur durchzuführen. Jeder Pfeil in der Figur steht für die Informationsübertragung von der Basisstation BS zur Mobilstation MS oder umgekehrt. Aufgrund der Pilotsequenzen CPICH des Common Pilot Channels führt die Mobilstation MS Messungen der Intensitäten der Kanäle der Einzelantennen in Abwärtsrichtung durch ("MESSUNG") und wählt einen der möglichen Strahlformungsvektoren aus ("AUSWAHL STRAHLFORMUNGSVEKTOR"). Dieser wird in Aufwärtsrichtung an die Basisstation BS übermittelt ("STRAHLFORMUNGSVEKTOR"). Die Basisstation BS führt dann die Strahlformung entsprechend dem von der MS gewünschten Strahlformungsvektor durch ("STRAHLFORMUNG"). Sie sendet die entsprechende Pilotsequenz auf dem dedizierten Kontrollkanal ("DPCH BESTÄTIGUNG"), was der Übermittlung eines "Echos" entspricht. Die Mobilstation erkennt dies und führt daraufhin eine Berechnung zur Verifikation des Strahlformungsvektors durch ("BERECH-

NUNG ZUR VERIFIKATION DES STRAHLFOR-MUNGSVEKTORS"), z.B. in Form einer Maximum a Posteriori Wahrscheinlichkeitsbetrachtung.

In Figur 2 ist der zeitliche Verfahrensablauf zwischen der Basisstation BS und der Mobilstation MS für den Fall dargestellt, dass die Basisstation BS einen anderen als den von der Mobilstation MS gewünschten Strahlformungsvektor zur Übermittlung von Signalen auf dem dedizierten Kanal verwendet. Die ersten Schritte in Figur 2 entsprechen denen der Figur 1: Aufgrund der Pilotsequenzen CPICH des Common Pilot Channel führt die Mobilstation MS die entsprechenden Messungen durch ("MESSUNG")und wählt einen der möglichen Strahlformungsvektoren aus ("AUSWAHL STRAHLFORMUNGSVEKTOR"). Dieser wird in Aufwärtsrichtung an die Basisstation BS übermittelt ("STRAHLFORMUNGSVEKTOR"). Die Basisstation BS kommt zu dem Ergebnis, dass es vorteilhafter ist, einen anderen als den von der Mobilstation MS gewünschten Strahlformungsvektor für die Verbindung zur Mobilstation MS zu verwenden ("ENTSCHEIDUNG STRAHLFORMUNGSVEKTOR"). Daher führt sie die Strahlformung mit diesem anderen Strahlformungsvektor durch ("STRAHLFORMUNG"). Sie sendet die entsprechende Pilotsequenz auf dem dedizierten Kontrollkanal ("DPCH ABLEHNUNG"). Die Mobilstation MS erkennt dies und verwendet den anderen, nicht von ihr gewünschten Strahlformungsvektor zur Kanalschätzung ("ANNAHME STRAHLFORMUNGSVEKTOR").

**Patentansprüche**

1. Verfahren zur Kanalschätzung in Abwärtsrichtung in einem Funkkommunikationssystem, umfassend mindestens eine Basisstation (BS) und mindestens eine Teilnehmerstation (MS), welche über eine Funkschnittstelle miteinander verbunden sind, wobei in der Abwärtsstrecke eine Strahlformung mittels mehrerer Antennen eingesetzt wird, wobei mindestens ein für die Verbindung von der mindestens einen Basisstation (BS) zu der mindestens einen Teilnehmerstation (MS) zu verwendender Strahlformungsvektor von der mindestens einen Teilnehmerstation (MS) ermittelt wird und von der mindestens einen Teilnehmerstation (MS) Information, welche Information über diesen mindestens einen Strahlformungsvektor umfasst, der mindestens einen Basisstation (BS) übermittelt wird, **dadurch gekennzeichnet,** **dass** die mindestens eine Basisstation (BS) der mindestens einen Teilnehmerstation (MS) Information über den für die Verbindung von der mindestens einen Basisstation (BS) zu der mindestens einen Teilnehmerstation (MS) verwendeten Strahlformungsvektor übermittelt, auf deren Grundlage die mindestens eine Teilnehmerstation (MS) eine Kanalschätzung durchführt.

2. Verfahren nach Anspruch 1, **dadurch gekennzeichnet, dass** die Information über den für die Verbindung von der mindestens einen Basisstation (BS) zu der mindestens einen Teilnehmerstation (MS) verwendeten Strahlformungsvektor Information über den aktuell für die Verbindung von der mindestens einen Basisstation (BS) zu der mindestens einen Teilnehmerstation (MS) verwendeten Strahlformungsvektor umfasst.

3. Verfahren nach Anspruch 1 oder 2, **dadurch gekennzeichnet, dass** die Information, welche von der mindestens einen Teilnehmerstation (MS) der mindestens einen Basisstation (BS) übermittelt wird, die zeitliche Entwicklung des mindestens einen Strahlformungsvektors betreffende Information umfasst.

4. Verfahren nach einem der Ansprüche 1 bis 3, **dadurch gekennzeichnet, dass** die Information über den für die Verbindung von der mindestens einen Basisstation (BS) zu der mindestens einen Teilneh-merstation (MS) verwendeten Strahlformungsvek-tor eine von der mindestens einen Basisstation (BS) aus einer Anzahl von Pilotsequenzen ausgewählte Pilotsequenz eines dedizierten Kanals umfasst.

5. Verfahren nach Anspruch 4, **dadurch gekennzeichnet, dass** die Anzahl von Pilotsequenzen zwei gegenphasige Sequenzen umfasst.

6. Verfahren nach einem der Ansprühe 1 bis 5, **dadurch gekennzeichnet, dass** die Kanalschätzung in Abwärtsrichtung durch die mindestens eine Teilnehmerstation (MS) unter Verwendung von mindestens einem von der mindestens einen Basisstation (BS) omnidirektional abgestrahlten Kanal erfolgt.

7. Verfahren nach einem der Ansprüche 1 bis 6, **dadurch gekennzeichnet, dass** die mindestens eine Teilnehmerstation (MS) nach dem Empfangen der Information über den für die Verbindung von der mindestens einen Basisstation (BS) zu der mindestens einen Teilnehmerstation (MS) verwendeten Strahlformungsvektor aus dieser Information einen für die Kanalschätzung in Abwärtsrichtung verwendeten Strahlformungsvektor entnimmt.

8. Verfahren nach einem der Ansprüche 1 bis 7 **dadurch gekennzeichnet, dass** die mindestens eine Teilnehmerstation (MS) nach dem Empfangen der Information über den für die Verbindung von der mindestens einen Basisstation (BS) zu der mindestens einen Teilnehmerstation (MS) verwendeten Strahlformungsvektor unter Verwendung dieser Information Berechnungen zur Verifikation des Strahlformungsvektors durchführt.

9. Verfahren nach einem der Ansprüche 1 bis 8 **dadurch gekennzeichnet, dass** die Information über den mindestens einen von der mindestens einen Teilnehmerstation (MS) ermittelten Strahlformungsvektor als einzelne Bits von dieser übermittelt wird.

10. Verfahren nach einem der Ansprüche 1 bis 9, **dadurch gekennzeichnet, dass** die Information über den für die Verbindung von der mindestens einen Basisstation (BS) zu der mindestens einen Teilnehmerstation (MS) verwendeten Strahlformungsvektor als einzelne Bits von der mindestens einen Basisstation (BS) übermittelt wird.

11. Verfahren nach einem der Ansprüche 1 bis 10, **dadurch gekennzeichnet, dass** die Information über den für die Verbindung von der mindestens einen Basisstation (BS) zu der mindestens einen Teilnehmerstation (MS) verwendeten Strahlformungsvektor die fehlerfreie Übertragung der von der mindestens einen Teilnehmerstation (MS) and die mindestens eine Basisstation (BS) übermittelten Strahlformungsvektoren betreffenden Information verifiziert.

12. Verfahren nach einem der Ansprüche 2 bis 11, **dadurch gekennzeichnet, dass** die Information über den für die Verbindung von der mindestens einen Basisstation (BS) zu der mindestens einen Teilnehmerstation (MS) verwendeten Strahlformungsvektor eine Bestätigung eines des mindestens einen von der mindestens einen Teilnehmerstation (MS) ermittelten Strahlformungsvektors als aktuell für die Verbindung von der mindestens einen Basisstation (BS) zu der mindestens einen Teilnehmerstation (MS) verwendeten Strahlformungsvektor indiziert.

13. Verfahren nach einem der Ansprüche 2 bis 12, **dadurch gekennzeichnet, dass** die Information über den für die Verbindung von der mindestens einen Basisstation (BS) zu der mindestens einen Teilnehmerstation (MS) verwendeten Strahlformungsvektor eine Ablehnung von mindestens einem des mindestens einen von der mindestens einen Teilnehmerstation (MS) ermittelten Strahlformungsvektor als aktuell für die Verbindung von der mindestens einen Basisstation (BS) zu der mindestens einen Teilnehmerstation (MS) verwendeten Strahlformungsvektor indiziert.

14. Verfahren nach einem der Ansprüche 1 bis 13, **dadurch gekennzeichnet, dass** es in Verbindung mit einem Verfahren in der mindestens einen Basisstation (BS) zur gemeinsamen Strahlformung für mehrere Teilnehmerstationen (MS) eingesetzt wird.

15. Verfahren nach einem der Ansprüche 1 bis 14, **dadurch gekennzeichnet, dass** es in einem CDMA Kommunikationssystem eingesetzt wird.

16. Funkkommunikationssystem, umfassend mindestens eine Basisstation (BS) und mindestens eine Teilnehmerstation (MS), welche über eine Funkschnittstelle miteinander verbunden sind, wobei die mindestens eine Basisstation (BS) mehrere Antennen zur Strahlformung in Abwärtsrichtung aufweist, und wobei die mindestens eine Teilnehmerstation (MS) Mittel zum Ermitteln von mindestens einem für die Verbindung von der mindestens einen Basisstation (BS) zu der mindestes einen Teilnehmerstation (MS) zu verwendenden Strahlformungsvektor und Mittel zum Übermitteln von Information, welche Information über diesen mindestens einen Strahlformungsvektor umfasst, aufweist, **dadurch gekennzeichnet,** **dass** die mindestens eine Basisstation (BS) Einrichtungen zum Übermitteln von Information über den für die Verbindung zwischen der mindestens einen Teilnehmerstation (MS) und der mindestens einen Basisstation (BS) verwendeten Strahlformungsvektor an die mindestens eine Teilnehmerstation (MS) aufweist, und **dass** die mindestens eine Teilnehmerstation (MS) Einrichtungen zur Durchführung von Kanalschätzung unter Verwendung der von der mindestens einen Basisstation (BS) übermittelten Information aufweist.

## FIG 1

BS                                          MS

CPICH

STRAHLFORMUNGSVEKTOR

- MESSUNG
- AUSWAHL STRAHL-FORMUNGSVEKTOR

- STRAHLFORMUNG

DPCH BESTÄTIGUNG

- BERECHNUNG ZUR VERIFIKATION DES STRAHLFORMUNGS-VEKTORS

## FIG 2

BS                                          MS

CPICH

STRAHLFORMUNGSVEKTOR

- MESSUNG
- AUSWAHL STRAHL-FORMUNGSVEKTOR

- ENTSCHEIDUNG STRAHL-FORMUNGSVEKTOR
- STRAHLFORMUNG

DPCH ABLEHNUNG

- ANNAHME STRAHL-FORMUNGSVEKTOR

**Europäisches Patentamt**

## EUROPÄISCHER RECHERCHENBERICHT

Nummer der Anmeldung

EP 02 01 8096

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| Y | DE 100 26 077 A (SIEMENS AG) 6. Dezember 2001 (2001-12-06) * Zusammenfassung; Abbildungen 4,5 * * Spalte 3, Zeile 33 - Spalte 4, Zeile 28 * --- | 1-16 | H04B7/06 H04B7/08 |
| D,Y | 3GPP: "3rd Generation Partnership Project; Technical Specification Group Radio Access Network; Tx diversity solutions for multiple antennas (Release 5)" 3GPP TR25.869 V1.0.0, Juni 2001 (2001-06), Seiten 1-36, XP002228572 France * Seite 7, Absatz 5.1 - Seite 12, Absatz 5.2.2 * * Seite 15, Absatz 5.3.1.2.3 - Seite 20, Absatz 5.5.1 * --- | 1-16 | |
| D,A | "UNIVERSAL MOBILE TELECOMMUNICATIONS SYSTEM (UMTS);PHYSICAL LAYER PROCEDURES(FDD) (3GPP TS 25.214 VERSION 3.4.0 RELEASE 1999)" ETSI TS 125 214 V3.4.0, XX, XX, September 2000 (2000-09), Seiten 1-48, XP002166612 * Seite 32, Absatz 7.1 - Seite 37, Absatz 7.3.1 * --- | 1-16 | RECHERCHIERTE SACHGEBIETE (int.Cl.7) H04B |
| A | SAMSUNG AND SEOUL NATIONAL UNIVERSITY: "Preliminary Version of Algorithm and Simulation Results for Tx Diversity with more than 2 Tx Antennas" TSG-RAN WORKING GROUP 1 MEETING #14, 4. Juli 2000 (2000-07-04), XP002197993 Finland * das ganze Dokument * --- -/-- | 1-16 | |

Der vorliegende Recherchenbericht wurde für alle Patentansprüche erstellt

| Recherchenort | Abschlußdatum der Recherche | Prüfer |
|---|---|---|
| BERLIN | 24. Januar 2003 | Danielidis, S |

**EP 1 392 005 A1**

Europäisches Patentamt

**EUROPÄISCHER RECHERCHENBERICHT**

Nummer der Anmeldung

EP 02 01 8096

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 00 72464 A (NOKIA NETWORKS OY.) 30. November 2000 (2000-11-30) * Zusammenfassung; Abbildung 5 * * Seite 18, Zeile 4 - Seite 19, Zeile 5 * * Seite 24, Zeile 1 - Zeile 13 * --- | 1,16 | |
| A | GB 2 313 261 A (MOTOROLA LTD.) 19. November 1997 (1997-11-19) * Zusammenfassung; Anspruch 1; Abbildung 1 * * Seite 15, Zeile 1 - Zeile 36 * ----- | 1 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| BERLIN | 24. Januar 2003 | Danielidis, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)

12

**ANHANG ZUM EUROPÄISCHEN RECHERCHENBERICHT
ÜBER DIE EUROPÄISCHE PATENTANMELDUNG NR.**    EP 02 01 8096

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-01-2003

| Im Recherchenbericht angeführtes Patentdokument | Datum der Veröffentlichung | Mitglied(er) der Patentfamilie | Datum der Veröffentlichung |
|---|---|---|---|
| DE 10026077 A | 06-12-2001 | DE 10026077 A1 | 06-12-2001 |
| | | AU 6579701 A | 03-12-2001 |
| | | WO 0191323 A1 | 29-11-2001 |
| WO 0072464 A | 30-11-2000 | WO 0072464 A1 | 30-11-2000 |
| | | AU 2548200 A | 12-12-2000 |
| | | AU 4144799 A | 12-12-2000 |
| | | BR 9917298 A | 19-02-2002 |
| | | CN 1304587 T | 18-07-2001 |
| | | WO 0072465 A1 | 30-11-2000 |
| | | EP 1097525 A1 | 09-05-2001 |
| | | EP 1179230 A1 | 13-02-2002 |
| | | NO 20010290 A | 18-01-2001 |
| | | US 2002105961 A1 | 08-08-2002 |
| | | US 2002009156 A1 | 24-01-2002 |
| GB 2313261 A | 19-11-1997 | AU 723992 B2 | 07-09-2000 |
| | | AU 1782897 A | 20-11-1997 |
| | | BR 9703357 A | 15-09-1998 |
| | | CA 2202829 A1 | 17-11-1997 |
| | | CN 1170282 A | 14-01-1998 |
| | | DE 69705356 D1 | 02-08-2001 |
| | | DE 69705356 T2 | 02-05-2002 |
| | | EP 0807989 A1 | 19-11-1997 |
| | | HU 9700908 A2 | 28-04-1998 |
| | | JP 10117162 A | 06-05-1998 |
| | | RU 2141168 C1 | 10-11-1999 |
| | | US 6192256 B1 | 20-02-2001 |
| | | US 5999826 A | 07-12-1999 |

EPO FORM P0461

Für nähere Einzelheiten zu diesem Anhang : siehe Amtsblatt des Europäischen Patentamts, Nr.12/82